# EUROPÄISCHE PATENTANMELDUNG

(11) **EP 1 862 206 A1**
(43) Veröffentlichungstag der Anmeldung: **05.12.2007**
(21) Anmeldenummer: 07107185.6
(22) Anmeldetag: 30.04.2007
(51) Int. Cl.: B01D 29/11, B01D 46/24, B01D 46/00, B01D 46/52

(54) **Filterelement zur Reinigung eines Fluids**

(30) Priorität: 29.05.2006 DE 202006008596 U
(71) Anmelder: MANN+HUMMEL GmbH, 71638 Ludwigsburg (DE)
(72) Erfinder: Eisengräber-Pabst, Jobst, 71726, Benningen a.N. (DE); Krieger, Joachim-Paul, 94419, Reisbach (DE); Schwinghammer, Alfons, 84130, Dingolfing (DE); Lampert, Johannes, 71686, Remseck (DE); Knodel, Daniela, 74372, Sersheim (DE); Pflüger, Frank, 74343, Sachsenheim (DE); Kupfer, Fritz, 84163, Poxau (DE)

(57) **Zusammenfassung**

Ein Filterelement zur Reinigung eines Fluids weist eine zickzackförmig gefaltetes, radial zu durchströmendes Filtermittel (2) auf, auf dessen Außenseite ein umlaufender Verstärkungsfaden (7) aufgebracht ist. Die Außenseite des Filtermittels ist in zwei axiale Teilabschnitte (5,6) unterteilt, in denen der Verstärkungsfaden (7) jeweils in mehreren umlaufenden Fadenwicklungen aufgebracht ist, wobei unmittelbar benachbarte Fadenwicklungen in den beiden Teilabschnitten in Achsrichtung einen unterschiedlichen Abstand zueinander aufweisen.

## Beschreibung

Die Erfindung bezieht sich auf ein Filterelement zur Reinigung eines Fluids nach dem Oberbegriff des Anspruches 1.

Aus der DE 20 2004 003 326 U1 ist ein als Hohlzylinder ausgebildetes Filterelement zur Reinigung eines Fluids bekannt, das ein zickzackförmig gefaltetes Filtermittel auf einem Stützgitter umfasst, wobei das Filtermittel radial von dem zu reinigenden Fluid durchströmt wird. Üblicherweise werden derartige Filter radial von außen angeströmt, der Innenraum stellt die Reinseite dar, über die das gereinigte Fluid axial abgeleitet wird. Die Stirnseiten des Filtermittels sind von Deckscheiben abgedichtet, die das Filtermittel axial strömungsdicht abschließen und außerdem zur Stabilisierung und Versteifung des Filterelementes dienen.

Das zickzackförmig gefaltete und ringförmig angeordnete Filtermittel besteht regelmäßig aus Vlies oder Papier, also einem Material, das nur eine verhältnismäßig geringe Eigenstabilität aufweist, weswegen zur Erhöhung der Stabilität auf der radialen Innenseite des Filtermittels ein Stützgerüst angeordnet ist. Zudem ist in der DE 20 2004 003 326 U1 auf die Außenseite ein umlaufender, spiralförmig gewickelter Faden aufgeklebt, welcher die Falten des Filtermittels insbesondere in Umfangsrichtung zusätzlich stabilisiert. Dieser Verstärkungsfaden erstreckt sich auf der Umfangsseite zwischen den beiden axialen Endscheiben des Filterelementes.

Das vergleichsweise weiche und instabile Material des Filtermittels weist darüber hinaus weitere Nachteile auf. Für die Montage oder zum Reinigen muss das Filterelement von einer Bedienperson ergriffen werden, was die Gefahr birgt, dass an den Faltenspitzen des Filtermittels Druckstellen mit radial eingedrückten Falten oder Verschiebungen der Filterfalten in Umfangsrichtung auftreten. Um dies zu vermeiden, muss das Filterelement entweder mit besonderer Vorsicht ergriffen werden oder es muss ein Griffschutz auf die äußere Mantelfläche aufgebracht werden, was aber den konstruktiven Aufwand weiter erhöht.

Der Erfindung liegt die Aufgabe zugrunde, mit einfachen konstruktiven Maßnahmen die Stabilität eines gattungsgemäßen Filterelements weiter zu verbessern.

Diese Aufgabe wird erfindungsgemäß mit den Merkmalen des Anspruches 1 gelöst. Die Unteransprüche geben zweckmäßige Weiterbildungen an.

Das erfindungsgemäße Filterelement weist einen Verstärkungsfaden auf, der auf die Faltenspitzen des Filtermediums bzw. -mittels in mehreren umlaufenden Fadenwicklungen aufgebracht ist, derart, dass in Achsrichtung des Filterelements gesehen eine Mehrzahl benachbarter und auf Abstand zueinander liegender Fadenwicklungen bzw. -spuren um das Filtermittel gelegt sind. Die Außenseite des Filtermittels ist axial in zwei oder mehrere Teilabschnitte unterteilt, wobei die Fadenwicklungen in den Teilabschnitten einen unterschiedlichen axialen Abstand zueinander aufweisen, so dass zum Beispiel bei einer Zweiteilung in einem ersten Teilabschnitt des Filtermittels eine engere Fadenwicklung und im zweiten Teilabschnitt eine weiter beabstandete Fadenwicklung gegeben ist. Der Teilabschnitt mit der weiter beabstandeten Fadenwicklung dient als Stabilisierungszone, die enge Fadenwicklung hat die Funktion eines Griffschutzes. Trotz der verhältnismäßig engen Wicklung ist aber eine ausreichend gute Durchströmbarkeit für das zu reinigende Fluid gegeben.

Der zweite Teilabschnitt mit der axial größeren Fadenwicklung hat dagegen primär Stabilisierungsfunktion und erst in zweiter Linie eine Funktion als Griffschutz. Aufgrund des größeren Abstandes zwischen benachbarten Fadenwicklungen stellt der Verstärkungsfaden praktisch keinen Strömungswiderstand für das zu reinigende und das Filtermittel radial durchströmende Fluid dar.

Der Verstärkungsfaden kann in konstruktiv einfacher Weise beispielsweise durch Verkleben auf der Faltenseite des Filtermittels aufgebracht und mit diesem fest verbunden werden. Die Stabilisierung und Verstärkung erfolgt hierbei sowohl in Umfangsrichtung des Filtermittels als auch in axialer und radialer Richtung. Die Verklebung besitzt den Vorteil, dass an allen Kontaktstellen zwischen dem Verstärkungsfaden und der äußeren Mantelfläche des Filtermittels eine feste Verbindung besteht. Gegebenenfalls kann es aber auch ausreichend sein, nur über einen Teil der Kontaktstellen eine feste Verbindung vorzusehen oder, gemäß einer alternativen Ausführungsform, auf eine Verklebung vollständig zu verzichten und lediglich aufgrund der Eigenspannung, mit der der Verstärkungsfaden um das Filtermittel gewickelt ist, und die hierdurch hervorgerufene geringfügige radiale Einschnürung des Fadens in das Filtermittel eine unverrückbare, feste Verbindung zwischen dem Faden und dem Filtermittel zu schaffen.

Zweckmäßig ist ein einziger, durchgehender Verstärkungsfaden vorgesehen, der sich spiralförmig über die einzelnen Teilabschnitte erstreckt. In dieser Ausführung windet sich der Verstärkungsfaden spiralförmig auf der Außenseite des Filtermittels über die axiale Länge der beiden Teilabschnitte. Alternativ ist es aber auch möglich, zwei separate Verstärkungsfäden vorzusehen, von denen sich jeweils ein Verstärkungsfaden spiralförmig auf der Außenseite jedes Teilabschnittes erstreckt. Wesentlich ist in beiden Fällen, dass die Gewindesteigung des spiralförmig aufgebrachten Verstärkungsfadens sich in den beiden Teilabschnitten unterscheidet.

Gemäß noch einer weiteren Ausführung verläuft der Verstärkungsfaden nicht spiralförmig, sondern es sind eine Mehrzahl separater Fäden vorgesehen, die in Kreisbahnen auf der Außenseite des Filtermittels umlaufen, wobei jede Kreisbahn konzentrisch und auf Abstand zur nächstliegenden Kreisbahn liegt. Der axiale Abstand zwischen benachbarten Kreisbahnen unterscheidet sich in den beiden Teilabschnitten. Als weitere, alternative Ausführung kommt eine spiralförmige Wicklung auf einem der beiden Teilabschnitte und eine kreisbahnförmige Wicklung auf dem zweiten Teilabschnitt in Betracht, wobei der als Griffschutzzone dienende Abschnitt zweckmäßig die spiralförmige Fadenwicklung aufweist.

Es hat sich als zweckmäßig erwiesen, den Abstand benachbarter Fadenwicklungen in den beiden axialen Teilabschnitten auf der Außenseite des Filtermittels sich um den Faktor 1.5 bis 10 unterscheiden zu lassen, so dass in dem ersten axialen Teilabschnitt, der der Griffschutzzone entspricht, eine um den Faktor 1.5 bis 10 dichtere Wicklung mit entsprechend reduziertem axialen Abstand zwischen unmittelbar benachbarten Fadenspuren gegeben ist. Innerhalb dieses Wertebereiches hat sich der Faktor 3 als besonders vorteilhaft erwiesen. In absoluten Zahlen ausgedrückt, beträgt der axiale Abstand innerhalb des ersten Teilabschnittes zwischen benachbarten Fadenwicklungen beispielsweise 3 bis 15 mm, insbesondere 8 mm, und im zweiten axialen Teilabschnitt 10 bis 60 mm, insbesondere 25 mm.

Weitere Vorteile und zweckmäßige Ausführungen sind den weiteren Ansprüchen, der Figurenbeschreibung und den Zeichnungen zu entnehmen.
Es zeigen:
- Fig. 1: eine perspektivische Darstellung eines zylindrischen Filterelementes zur Reinigung eines Fluids, mit einem als Faltenfilter ausgeführten Filtermittel, das radial von dem Fluid durchströmt wird, mit einem auf der Außenseite des Filtermittels spiralförmig aufgeklebten Verstärkungsfaden,
- Fig. 2: eine schematische Darstellung einer Anlage zum Aufbringen des Verstärkungsfadens auf die Außenseite des Filtermittels.

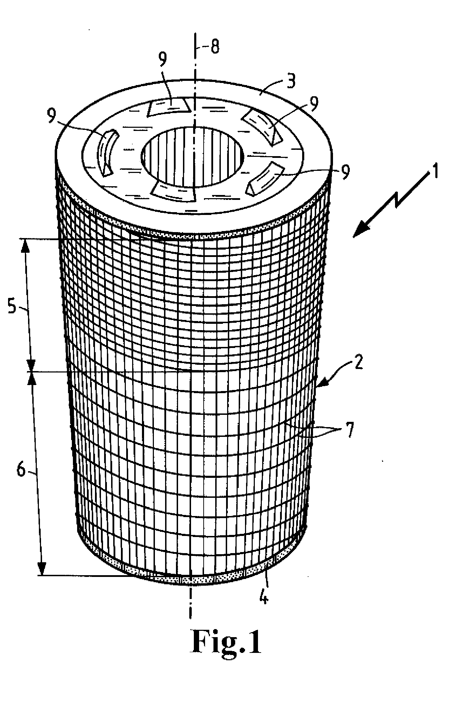

Das in Fig. 1 dargestellte Filtermittel 1 wird zur Fluidfilterung eingesetzt, beispielsweise zur Luftfilterung insbesondere der Motoransaugluft oder zur Flüssigkeitsfilterung in Kraftfahrzeugen, insbesondere als Ölfilter oder als Kraftstofffilter. Das Filterelement 1 umfasst ein Filtermittel 2, welches hohlzylindrisch ausgebildet ist und aus einem zickzackförmig gefalteten Filterpapier bzw. Filtervlies besteht. Das Filtermittel 2 wird radial von außen angeströmt - die Außenseite stellt die Rohseite dar -, wobei das gereinigte Fluid über den Innenraum, der die Reinluftseite darstellt, axial abgeleitet wird. Die Falten des Filtermittels 2 erstrecken sich in Radialrichtung. Axial ist das Filterelement 1 an beiden Stirnseiten von jeweils einer Stirnscheibe 3 bzw. 4 eingefasst. Das Filterelement 1 ist Teil einer Filtereinrichtung, die bevorzugt in Kraftfahrzeugen eingesetzt wird. An den Stirnscheiben können, wie an der oben liegenden Stirnscheibe 3 angedeutet, Befestigungs- bzw. Rastmittel 9 vorgesehen sein, die zur sicheren und festen Verankerung des Filterelements 1 in der hierfür vorgesehenen Filtervorrichtung dienen.

Auf die Filterspitzen des Filtermediums 2 ist ein spiralförmig umlaufender, durchgehender Verstärkungsfaden 7 aufgeklebt, der sich axial zwischen den beiden Stirnscheiben 3 und 4 erstreckt. Die Außenseite des Filtermittels 2 kann in zwei axiale Teilabschnitte 5 und 6 unterteilt werden, von denen der erste, der oberen Deckscheibe 3 benachbarte Teilabschnitt die Funktion einer Griffschutzzone übernimmt. Innerhalb dieses ersten Teilabschnittes 5 weist der spiralförmig aufgewickelte Verstärkungsfaden 7 einen kleineren axialen Abstand zwischen benachbarten Fadenwicklungen bzw. Fadenspuren auf, als dies im zweiten, unteren axialen Teilabschnitt 6 der Fall ist, welcher der unteren Stirnscheibe 4 zugewandt ist. Der aufgeklebte, spiralförmig umlaufende Verstärkungsfaden 7 dient zum einen über die gesamte axiale Länge des Filtermittels 2, also sowohl über den ersten Teilabschnitt 5 als auch über den zweiten Teilabschnitt 6, zur Verstärkung und Stabilisierung des Filterpapiers bzw. Filtervlieses, so dass die Filterfalten sowohl in Umfangsrichtung als auch in Achsrichtung eine zusätzliche Stabilisierung erfahren. Zugleich ist der Abstand zwischen benachbarten Fadenwicklungen in beiden Teilabschnitten 5 und 6 groß genug, dass der Strömungswiderstand für das zu reinigende Fluid nicht oder nicht signifikant erhöht ist. Aufgrund der engeren Wicklung im ersten, oberen Teilabschnitt 5 besitzt das Filtermittel in diesem Teilabschnitt aber eine noch größere Stabilität als im unteren, zweiten Teilabschnitt 6, ohne die Filtrierleistung signifikant einzuschränken. Die dichter benachbarten Fadenwicklungen stellen einen Griffschutz dar, der verhindern soll, dass beim Ergreifen des Filterelementes im Bereich des oberen Teilabschnittes 5 das Filterpapier bzw. Filtervlies beschädigt wird, insbesondere radial eingedrückt wird bzw. dass die Filterfalten in Umfangsrichtung verschoben werden. Zudem hat die engere Wicklung im oberen Teilabschnitt 5 auch eine Schmutz abweisende Funktion beim Ergreifen des Filterelements.

Der Verstärkungsfaden 7 ist zweckmäßig durchgehend ausgebildet und erstreckt sich über beide axiale Teilabschnitte 5 und 6. Es kann aber auch vorteilhaft sein, zwei separate Verstärkungsfäden vorzusehen, von denen jeweils einer sich über einen Teilabschnitt 5 bzw. 6 erstreckt. Außerdem ist es auch möglich, anstelle einer spiralförmigen Wicklung eine Vielzahl von einzelnen Verstärkungsfäden in parallel zueinander angeordneten Kreisbahnen um die Außenseite des Filtermittels zu legen.

Gemäß einer weiteren, alternativen Ausführung ist vorgesehen, dass der Verstärkungsfaden spiralförmig gewickelt ist und der Abstand von Wicklung zu Wicklung zunimmt.

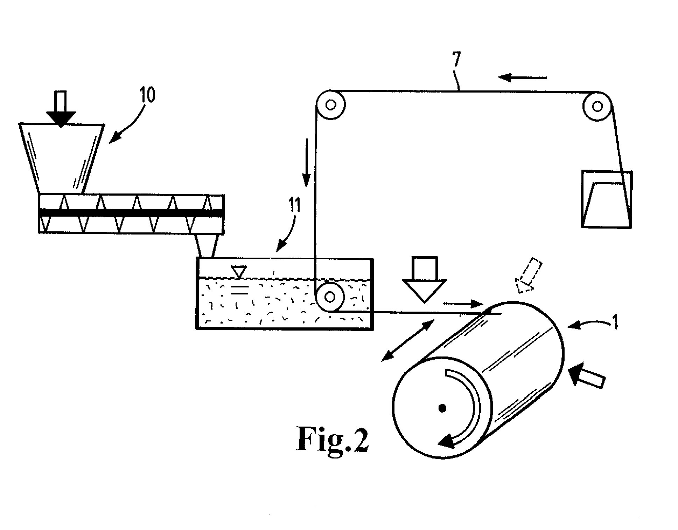

In Fig. 2 ist eine Anlage zum Aufbringen und Verkleben des Verstärkungsfadens auf die Außenseite des Filterelementes 1 dargestellt. In einer ersten Station 10 der Anlage wird als Verklebungsmittel ein Hotmelt-Granulat über einen Trichter eingebracht und vorgewärmt. In einer zweiten Station 11 der Anlage, die drei Erhitzungszonen umfasst, wird das verflüssigte Verklebungsmittel in einem Bad auf den Verstärkungsfaden 7 aufgebracht, der durch dieses Bad geführt und anschließend auf die Außenseite des Filterelementes 1 spiralförmig aufgebracht wird, wobei sich das Filterelement 1 um seine Längsachse dreht. Zugleich wird entweder das Filterelement 1 axial verschoben, um die spiralförmige Wicklung des Verstärkungsfadens auf die Außenseite des Filtermittels zu erreichen, oder es wird bei stationär umlaufenem Filterelement 1 der Faden axial verschoben. Der aus dem Bad in der zweiten Station 11 herausgeführte und mit flüssigem Klebstoff benetzte Verstärkungsfaden 7 wird einer Atmosphäre mit heißer Luft ausgesetzt. Gegebenenfalls wird die Außenseite des Filterelementes auch mit Druckluft beaufschlagt, um sicherzustellen, dass der Verstärkungsfaden sich sicher an die Außenseite des Filtermittels anlegt.

## Patentansprüche

1. Filterelement zur Reinigung eines Fluids, mit einem zickzackförmig gefalteten, radial zu durchströmenden Filtermittel (2), mit einem auf die Außenseite des Filtermittels (2) aufgebrachten, umlaufenden Verstärkungsfaden (7), **dadurch gekennzeichnet, dass** mindestens zwei axiale Teilabschnitte (5, 6) auf der Außenseite des Filtermittels (2) vorgesehen sind, in denen der Verstärkungsfaden (7) jeweils in mehreren umlaufenden Fadenwicklungen auf die Außenseite aufgebracht ist, wobei unmittelbar benachbarte Fadenwicklungen in den beiden Teilabschnitten (5, 6) in Achsrichtung einen unterschiedlichen Abstand zueinander aufweisen.

2. Filterelement nach Anspruch 1, **dadurch gekennzeichnet, dass** der Verstärkungsfaden (7) spiralförmig auf die Außenseite des Filtermittels (2) gewickelt ist und in den beiden axialen Teilabschnitten (5, 6) eine unterschiedliche Gewindesteigung aufweist.

3. Filterelement nach Anspruch 2, **dadurch gekennzeichnet, dass** ein einziger durchgehender Verstärkungsfaden (7) vorgesehen ist, der sich über beide axiale Teilabschnitte (5, 6) erstreckt.

4. Filterelement nach Anspruch 1, **dadurch gekennzeichnet, dass** mehrere einzelne Verstärkungsfäden (7) vorgesehen sind.

5. Filterelement nach Anspruch 4, **dadurch gekennzeichnet, dass** die Verstärkungsfäden (7) parallel zueinander angeordnet sind.

6. Filterelement nach einem der Ansprüche 1 bis 5, **dadurch gekennzeichnet, dass** der Abstand benachbarter Fadenwicklungen in Achsrichtung sich in den beiden axialen Teilabschnitten (5, 6) um den Faktor 1.5 bis 10 unterscheidet.

7. Filterelement nach Anspruch 2, **dadurch gekennzeichnet, dass** der Abstand sich in den beiden axialen Teilabschnitten (5, 6) um den Faktor 3 unterscheidet.

8. Filterelement nach einem der Ansprüche 1 bis 7, **dadurch gekennzeichnet, dass** der Abstand im ersten axialen Teilabschnitt (5) 3 bis 15 mm, insbesondere 8 mm beträgt.

9. Filterelement nach einem der Ansprüche 1 bis 8, **dadurch gekennzeichnet, dass** der Abstand im zweiten axialen Teilabschnitt (6) 10 bis 60 mm, insbesondere 25 mm beträgt.

10. Filterelement nach einem der Ansprüche 1 bis 9, **dadurch gekennzeichnet, dass** der axiale Teilabschnitt (5) mit geringerem Abstand zwischen benachbarten Fadenwicklungen sich über eine kleinere axiale Länge erstreckt als der zweite Teilabschnitt (6) mit größerem Abstand zwischen benachbarten Fadenwicklungen.

11. Filterelement nach einem der Ansprüche 1 bis 10, **dadurch gekennzeichnet, dass** der Abstand zwischen benachbarten Fadenwicklungen innerhalb eines Teilabschnitts (5 bzw. 6) konstant ist.

12. Filterelement nach einem der Ansprüche 1 bis 10, **dadurch gekennzeichnet, dass** der Abstand zwischen benachbarten Fadenwicklungen von Teilabschnitt (5) zu Teilabschnitt (6) zunimmt.
